# FASCICULE DE BREVET EUROPEEN

(11) **EP 4 018 554 B1**
(45) Date de publication et mention de la délivrance du brevet: **27.09.2023**
(21) Numéro de dépôt: 20757892.3
(22) Date de dépôt: 17.08.2020
(51) Int. Cl.: H04B 7/024, H04W 12/55, H04W 12/61, H04W 76/10, H04W 88/12, H04W 92/20, H04W 88/08

(54) **PROCEDES ET DISPOSITIFS D'APPAIRAGE DANS UN RESEAU SANS-FIL**
VERFAHREN UND VORRICHTUNGEN ZUR PAARUNG IN EINEM DRAHTLOSNETZWERK
METHODS AND DEVICES FOR PAIRING IN A WIRELESS NETWORK

(30) Priorité: 21.08.2019 FR 1909317
(43) Date de publication de la demande: 29.06.2022
(73) Titulaire: SAGEMCOM BROADBAND SAS, 92500 Rueil-Malmaison (FR)
(72) Inventeur: FRIGOUT, Arnaud, 92500 RUEIL MALMAISON (FR); FAYE, Stanislas, 92500 RUEIL MALMAISON (FR)
(74) Mandataire: Cabinet Le Guen Maillet
(86) Numéro de dépôt international: PCT/EP2020/073016
(87) Numéro de publication internationale: WO 2021/032691

(56) Documents cités:
- WO-A1-2016/085582
- US-A1- 2014 080 491
- US-A1- 2016 157 225
- US-A1- 2016 262 163
- US-A1- 2019 215 704

## Description

### DOMAINE TECHNIQUE

L'invention concerne un procédé d'appairage d'un terminal à un point d'accès d'un réseau de communication sans fil comprenant une pluralité de points d'accès.

### ETAT DE LA TECHNIQUE ANTERIEURE

Un réseau de communication sans fil conforme à l'une des normes IEEE 802.11 comprend typiquement une pluralité de dispositifs électroniques comprenant a minima un module radiofréquence permettant l'établissement de communications conformément à l'une des normes IEEE 802.11, ou dit autrement, conformément à l'une des normes Wi-Fi (marque déposée). Un tel réseau comprend typiquement un dispositif électronique communément appelé point d'accès (« Access Point » en anglais, ou « AP ») et une pluralité de dispositifs électroniques dits terminaux (ou utilisateurs) pouvant établir des connexions sans fil avec le point d'accès et/ou entre eux. Dans un environnement résidentiel, le point d'accès est typiquement fourni par un opérateur Internet, c'est-à-dire une passerelle domestique (« home gateway », ou « residential gateway », en anglais). Les terminaux sont typiquement des ordinateurs, télévisions, tablettes ou téléphones dits « intelligents » (« smartphone » en anglais). On dit ainsi communément que les terminaux sont associés « en Wi-Fi » avec le point d'accès.

Des systèmes d'extension de couverture de communication sans-fil peuvent être utilisés afin d'augmenter la portée de ces réseaux de communication sans fil en coordonnant plusieurs points d'accès AP (« Access Point » en anglais) répartis. Ces différents points d'accès mettent tous à disposition un même réseau local sans-fil WLAN (« Wireless Local Area Network » en anglais). Dans le cadre de la technologie Wi-Fi, tous ces points d'accès AP utilisent ainsi un même identifiant SSID (« Service Set IDentifier » en anglais) et un même mot de passe (aussi appelé clef de sécurité). Ainsi, l'extension de couverture de communication sans-fil est transparente pour les dispositifs connectés au réseau local sans-fil WLAN.

L'utilisateur d'un terminal souhaitant se connecter à un réseau Wi-Fi doit classiquement renseigner un identifiant SSID du réseau (« Service Set IDentifier » en anglais) et un mot de passe (aussi appelé clef de sécurité). Afin d'améliorer la sécurité de telles connections et notamment permettre l'utilisation de mots de passe complexes, la WFA (« *Wi-Fi Alliance* » en anglais) a défini un protocole dit WPS (« *Wi-Fi Protected Setup* » en anglais) permettant d'associer aisément un nouveau terminal à un réseau Wi-Fi existant. Ce protocole permet à deux équipements (par exemple un ordinateur et un point d'accès) de se connecter l'un à l'autre par exemple lorsqu'un utilisateur appuie sur un bouton physique ou virtuel sur les deux équipements dans un certain délai, par exemple deux minutes. Les deux vont alors se reconnaître et le point d'accès va fournir au terminal l'ensemble des informations nécessaires à sa connexion, notamment le SSID et le mot de passe sans que l'utilisateur n'ait à les fournir.

Le protocole WPS définit également des mécanismes particuliers permettant d'éviter qu'un terminal ne se connecte à un autre réseau Wi-Fi que celui sur lequel il souhaite se connecter dans le cas où une session WPS est en cours sur cet autre réseau Wi-Fi. De même, le protocole WPS définit des mécanismes particuliers permettant d'éviter qu'un terminal étranger ne se connecte sur le réseau Wi-Fi de l'utilisateur. Ces cas sont des cas de recouvrement (« Overlap » en anglais).

A cet effet, il est prévu qu'un point d'accès, dit point d'accès courant, soit à l'écoute des autres sessions WPS en cours sur d'autres points d'accès. Si une session WPS est en cours sur un autre point d'accès, alors le point d'accès courant met un terme à sa propre session WPS. Il est également prévu qu'un terminal scanne l'ensemble des canaux qu'il supporte pour rechercher une session WPS sur un point d'accès. S'il en détecte plusieurs, il doit mettre un terme à sa propre session et avertir l'utilisateur, sauf cas particulier décrit ci-dessous. Le protocole WPS évite ainsi qu'un terminal ne se connecte à un autre réseau que celui prévu parce que cet autre réseau aurait une session WPS en cours au même moment. Le protocole WPS actuel ne permet pas d'avoir plusieurs sessions WPS sur la même bande de fréquences. Toutefois, dans le cas particulier d'un point d'accès multi-bandes (p.ex. 2.4 Ghz et 5 Ghz), il est toléré d'avoir une session WPS en même temps sur chacune des bandes à condition que les deux sessions possèdent le même identifiant UUID (pour «Universally Unique IDentifier » en anglais). Un terminal détectant ces deux sessions ne devrait donc pas mettre un terme à sa propre session.

Définir un unique point d'accès pour répondre aux requêtes de connexion WPS permet d'éviter certains cas de recouvrement. Toutefois, un terminal éloigné de ce point d'accès particulier ne pourra pas se connecter au réseau alors qu'il peut être plus proche spatialement d'un autre point d'accès. La demande de brevet US 2019/15704 divulgue la gestion de canal dans un point d'accès virtuel. La demande de brevet WO 2016/085582 divulgue un système d'appairage dans un réseau WLAN. La demande de brevet US 2014/080491 divulgue l'allocation de créneaux temporels.

Il est alors souhaitable de pallier ces inconvénients de l'état de la technique.

### EXPOSE DE L'INVENTION

La présente invention a pour but de résoudre les inconvénients de l'art antérieur en proposant un dispositif et un procédé d'appairage d'un terminal à un point d'accès d'un réseau de communication sans fil qui permette à un seul point d'accès de répondre à une requête de connexion WI-FI telle que par exemple une requête de connexion WPS quelle que soit la position du terminal dans le réseau de communication sans fil.

A cette fin, l'invention concerne un procédé d'appairage d'un terminal à un point d'accès d'un réseau de communication sans fil, tel que défini par la revendication 1.

L'invention concerne aussi un procédé d'appairage d'un terminal à un point d'accès d'un réseau de communication sans fil, ledit réseau comprenant une pluralité de points d'accès dits points d'accès exécutants, les point d'accès exécutants étant coordonnés de manière centralisée par un point d'accès assurant la fonction de gestionnaire, dit point d'accès gestionnaire, caractérisé en ce que le procédé comporte les étapes suivantes exécutées par un point d'accès exécutant de :
- réception d'un message comprenant une information indiquant que ledit terminal souhaite s'appairer audit point d'accès ;
- envoi d'un message audit point d'accès gestionnaire, le message comprenant une information indiquant que ledit terminal souhaite s'appairer audit point d'accès ;
- réception d'un message du point d'accès gestionnaire comprenant des informations représentatives d'au moins un créneau temporel pour lequel le point d'accès exécutant est autorisé à établir une session d'appairage WPS avec le nouveau terminal ;
- ajout dans au moins une trame de balise dudit point d'accès d'une information indiquant qu'une session d'appairage est active, uniquement pendant la durée du au moins un créneau temporel pour lequel le point d'accès exécutant est autorisé à établir une session d'appairage WPS avec le nouveau terminal.

L'invention concerne aussi un dispositif d'appairage d'un terminal à un point d'accès d'un réseau de communication sans fil, tel que défini par la revendication 11.

L'invention concerne aussi un dispositif d'appairage d'un terminal à un point d'accès d'un réseau de communication sans fil, ledit réseau comprenant une pluralité de points d'accès dits points d'accès exécutants, les points d'accès exécutants étant coordonnés de manière centralisée par un point d'accès assurant la fonction de gestionnaire, dit point d'accès gestionnaire, le dispositif étant un dispositif pour un point d'accès exécutant et comporte :
- des moyens pour recevoir un message comprenant une information indiquant que ledit terminal souhaite s'appairer audit point d'accès ;
- des moyens pour envoyer un message audit point d'accès gestionnaire, le message comprenant une information indiquant que ledit terminal souhaite s'appairer audit point d'accès ;
- des moyens pour recevoir du point d'accès gestionnaire un message comprenant des informations représentatives d'au moins un créneau temporel pour lequel le point d'accès exécutant est autorisé à établir une session d'appairage WPS avec le nouveau terminal ;
- des moyens pour ajouter dans au moins une trame de balise dudit point d'accès une information indiquant qu'une session d'appairage est active, uniquement pendant la durée du au moins un créneau temporel pour lequel le point d'accès exécutant est autorisé à établir une session d'appairage WPS avec le nouveau terminal.

Selon un mode particulier de réalisation, le procédé comporte en outre une étape de :
- réception d'un message d'un point d'accès exécutant un message comprenant une information indiquant que la session d'appairage WPS a échoué pendant la durée du au moins un créneau temporel,
- obtention, pour chaque point d'accès exécutant des informations représentatives d'au moins un créneau temporel pour lequel le point d'accès exécutant est autorisé à établir une session d'appairage WPS avec le nouveau terminal, chaque créneau temporel étant disjoint des autres créneaux temporels ;
- envoi d'un message à chaque point d'accès exécutant comprenant au moins les informations représentatives du au moins un créneau temporel pour lequel le point d'accès exécutant est autorisé à établir une session d'appairage WPS avec le nouveau terminal.

Selon un mode particulier de réalisation, le procédé comporte en outre une étape de :
- réception d'un message d'un point d'accès exécutant comprenant une information indiquant que la session d'appairage WPS a échoué pendant la durée du au moins un créneau temporel,
- envoi d'un message à un autre point d'accès exécutant indiquant que l'autre point d'accès exécutant est autorisé à établir une session d'appairage WPS avec le nouveau terminal. Selon un mode particulier de réalisation, les créneaux temporels ont une durée identique. Selon un mode particulier de réalisation, au moins un créneau temporel a une durée différente des autres créneaux temporels.

Selon un mode particulier de réalisation, au moins deux créneaux temporels sont alloués à un point d'accès exécutant.

Selon un mode particulier de réalisation, le message comprenant des informations représentatives d'au moins un créneau temporel pour lequel le point d'accès exécutant est autorisé à établir une session d'appairage WPS avec le nouveau terminal comporte en outre au moins une information identifiant au moins un autre point d'accès exécutant et le procédé comporte en outre une étape de :
- envoi d'un message à l'autre point d'accès exécutant indiquant que l'autre point d'accès exécutant est autorisé à établir une session d'appairage WPS avec le nouveau terminal.

La présente invention concerne aussi un programme d'ordinateur qui peut être stocké sur un support et/ou téléchargé d'un réseau de communication, afin d'être lu par un dispositif. Ce programme d'ordinateur comprend des instructions pour implémenter le procédé mentionné ci-dessus selon l'une quelconque de ses variantes, lorsque le programme est exécuté par une unité de calcul du dispositif. L'invention concerne également des moyens de stockage comprenant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente schématiquement un système de communication sans fil dans lequel la présente invention peut être implémentée ;
[Fig. 2] illustre schématiquement un exemple d'architecture matérielle d'un point d'accès selon la présente invention ;
[Fig. 3] représente un premier exemple d'algorithme exécuté par un point d'accès lorsqu'il est gestionnaire selon la présente invention ;
[Fig. 4] représente un premier exemple d'algorithme exécuté par un point d'accès lorsqu'il est exécutant selon la présente invention ;
[Fig. 5] représente un second exemple d'algorithme exécuté par un point d'accès lorsqu'il est gestionnaire selon la présente invention ;
[Fig. 6] représente un second exemple d'algorithme exécuté par un point d'accès lorsqu'il est exécutant selon la présente invention ;
[Fig.7] représente un premier exemple de la répartition dans le domaine temporel d'une autorisation d'établissement de session WPS ;
[Fig.8] représente un second exemple de la répartition dans le domaine temporel d'une autorisation d'établissement de session WPS ;
[Fig.9] représente un troisième exemple de la répartition dans le domaine temporel d'une autorisation d'établissement de session WPS.

### EXPOSE DETAILLE DE MODES DE REALISATION

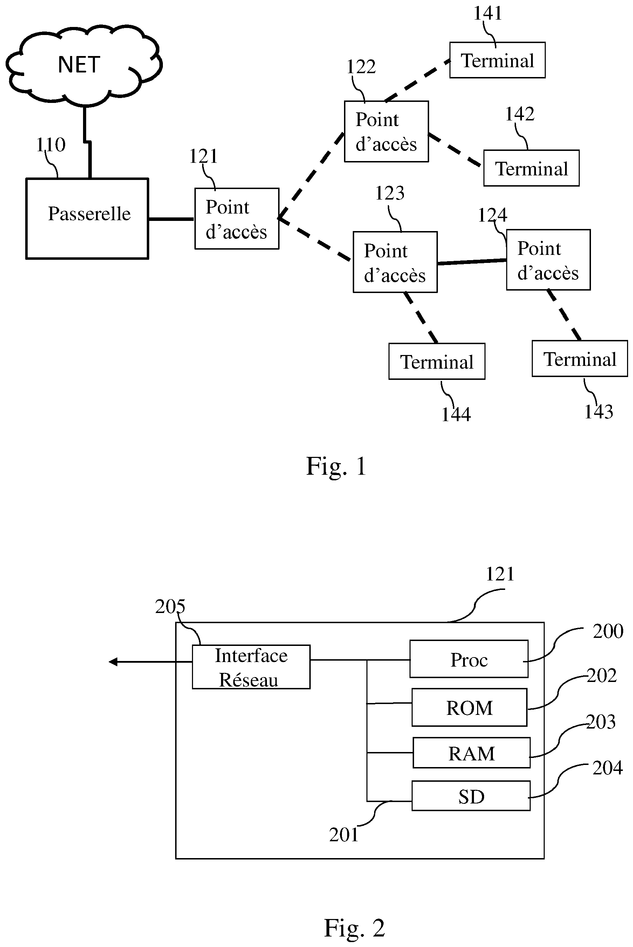

La **Fig. 1** illustre schématiquement un système de communication sans fil dans lequel la présente invention peut être implémentée.

Le système de communication comporte un ensemble de points d'accès AP à un réseau local sans-fil WLAN (« Wireless Local Area Network » en anglais) 121, 122, 123 et 124 interconnectés. Les points d'accès mettent tous à disposition un même réseau local sans-fil WLAN (même nom...).

Dans le cadre de la technologie Wi-Fi et de la présente invention, tous les points d'accès AP peuvent utiliser un identifiant SSID et un mot de passe identiques ou différents.

Les points d'accès sont interconnectés grâce à des liaisons filaires, par exemple de type Ethernet, ou à des liaisons sans-fil, par exemple une liaison Wi-Fi utilisant un identifiant SSID différent dudit réseau local sans-fil WLAN lui-même. A noter qu'il peut y avoir plusieurs points d'accès dans un même équipement physique (par exemple une passerelle Internet comme la passerelle 110, un répéteur Wi-Fi (« extender » en anglais), ou encore un décodeur télévision qui jouerait le rôle d'extendeur du réseau Wi-Fi). Ces points d'accès peuvent opérer dans une même bande de fréquence ou bien sur des bandes différentes.

De manière illustrative, la Fig. 1 montre que le point d'accès 121 est connecté au point d'accès 122 et au point d'accès 123 grâce à une liaison sans-fil représentée en pointillés (distincte du réseau local sans-fil WLAN lui-même), et le point d'accès 124 est connecté au point d'accès 123 grâce à une liaison filaire représentée en trait continu.

Le système d'extension de couverture de communication sans-fil permet ainsi d'interconnecter une passerelle 110 d'accès à l'Internet, un terminal 141, un terminal 142, un terminal 143 et un terminal 144. Le terminal 141 est par exemple un téléphone intelligent (« smartphone » en anglais) connecté par une liaison sans-fil au point d'accès 122, c'est-à-dire que le terminal 141 est ainsi connecté via le réseau local sans-fil WLAN grâce au point d'accès 122. Le terminal 142 est par exemple un PC connecté par une liaison filaire au point d'accès 122. Le terminal 143 est par exemple une tablette connectée par une liaison sans-fil au point d'accès 124, c'est-à-dire que le terminal 143 est ainsi connecté via le réseau local sans-fil WLAN grâce au point d'accès 124. Le terminal 144 est par exemple une unité de stockage en réseau NAS (« Network Attached Storage » en anglais) connectée par une liaison sans-fil au point d'accès 123, c'est-à-dire que le terminal 144 est ainsi connecté via le réseau local sans-fil WLAN grâce au point d'accès 123.

Dans un tel système, chaque point d'accès peut être un gestionnaire ou un exécutant. A un instant donné, il y a un unique point d'accès gestionnaire dans l'ensemble du réseau. Le point d'accès gestionnaire peut être désigné par configuration figée ou dynamiquement par élection. Le point d'accès gestionnaire est par exemple le point d'accès qui est au plus près de la passerelle 110 d'accès à l'Internet, à savoir le point d'accès 121 dans le contexte de la Fig. 1. Les autres points d'accès sont alors des exécutants.

Le point d'accès gestionnaire actif peut par exemple être sélectionné à partir des numéros de série des points d'accès présents. Dans un mode particulier de réalisation, le point d'accès ayant le plus petit numéro de série est choisi comme gestionnaire. Dans une variante, le point d'accès gestionnaire est sélectionné par un utilisateur via une interface homme-machine.

Le point d'accès gestionnaire communique avec les points d'accès exécutants par l'intermédiaire d'un bus de communication. Le bus ISM décrit dans la demande de brevet EP2791798 est un exemple d'un tel bus de communication. En effet, le point d'accès gestionnaire a besoin de connaître les dispositifs exécutants présents sur le réseau. Les dispositifs exécutants ne communiquent pas entre eux.

La Fig. 2 illustre schématiquement un exemple d'architecture matérielle d'un point d'accès selon la présente invention.

Le point d'accès comprend :
- un processeur, micro-processeur, ou microcontrôleur 200 ;
- une mémoire volatile 203 ;
- une mémoire non volatile 202 ;
- éventuellement, un lecteur 204 de medium de stockage tel qu'un lecteur de carte SD (*Secure Digital Card* en anglais ou *Carte Numérique Sécurisée* en français) ou un disque dur ;
- une interface réseau 205 comportant une ou plusieurs interfaces réseaux Wi-Fi 205 et éventuellement un module de communication filaire ;
- un bus de communication 201 reliant le processeur 200 à la mémoire ROM 202, à la mémoire RAM 203, au lecteur de médium de stockage 204 et à l'interface réseau 205.

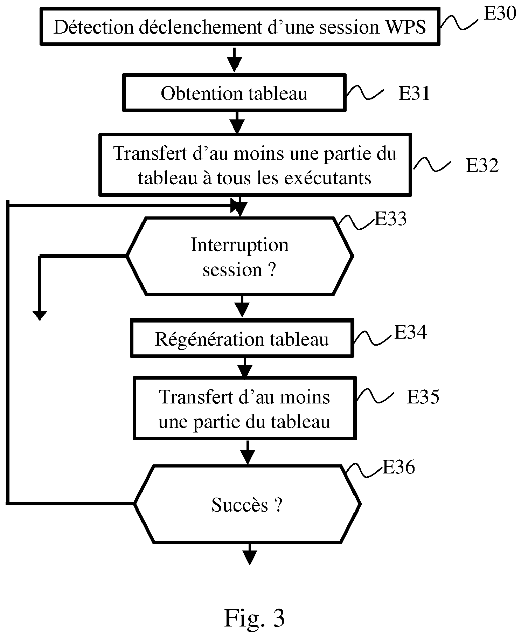

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le point d'accès est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec la Fig. 3 ou 4 ou 5 ou 6.

Tout ou partie du procédé décrit en relation avec la Fig. 3 ou 4 ou 5 ou 6 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un premier exemple d'algorithme exécuté par un point d'accès lorsqu'il est gestionnaire selon la présente invention.

A l'étape E30, le point d'accès gestionnaire détecte le déclenchement par un utilisateur d'une requête ou demande de session WPS. Le déclenchement d'une telle session se fait par exemple par appui sur un bouton physique d'un des points d'accès du système. Selon une variante, le déclenchement d'une telle session se fait par appui sur un bouton virtuel d'une interface homme machine associée à l'un des points d'accès du système.

Le déclenchement de la session WPS peut être effectué sur le point d'accès gestionnaire ou sur un point d'accès exécutant.

Lorsque le déclenchement de la session WPS est effectué sur un point d'accès exécutant, le point d'accès gestionnaire reçoit un message du point d'accès ayant détecté l'appui sur le bouton.

A l'étape E31, le point d'accès gestionnaire obtient un tableau qui comporte les informations de la distribution des autorisations à procéder à l'établissement d'une session WPS avec un nouveau terminal. Le point d'accès gestionnaire de connexion WPS a pour rôle d'établir le scénario à mettre en place pour mener à bien l'appairage WPS. Ce scénario définit la séquence de distribution d'un ticket ainsi que sa durée de validité. Le tableau comprend, pour chaque exécutant, des informations représentatives du ou des créneaux temporels pour lesquels le point d'accès exécutant est autorisé à établir une session WPS avec le nouveau terminal, l'ordre dans lequel le point d'accès exécutant est autorisé à établir une session WPS avec le nouveau terminal.

Par exemple, le point d'accès gestionnaire comporte dans sa mémoire différents tableaux et en sélectionne un en fonction du point d'accès qui a détecté l'appui sur le bouton WPS. En variante le point d'accès gestionnaire détermine en temps réel le tableau en fonction du point d'accès qui a détecté l'appui sur le bouton WPS.

A l'étape suivante E32, le point d'accès gestionnaire commande le transfert d'au moins une partie du tableau obtenu à chaque exécutant. Par exemple, le point d'accès gestionnaire commande le transfert à chaque point d'accès exécutant des informations représentatives du ou des créneaux temporels pour lesquels le point d'accès exécutant est autorisé à établir une session WPS avec le nouveau terminal ainsi que l'identifiant du prochain point d'accès exécutant qui sera, si la session WPS n'est pas établie, autorisé à établir une session WPS avec le nouveau terminal. Par exemple, le point d'accès gestionnaire transfère à chaque point d'accès exécutant la totalité des informations comprises dans le tableau.

A l'étape suivante E33, le point d'accès gestionnaire vérifie si un message représentatif d'un échec de la session WPS est reçu.

Dans l'affirmative, le point d'accès gestionnaire passe à l'étape E34, dans la négative, le point d'accès gestionnaire passe à l'étape E36.

A l'étape E34, le point d'accès gestionnaire génère ou sélectionne un nouveau tableau. Par exemple, le point d'accès gestionnaire peut redonner l'autorisation au dernier point d'accès exécutant autorisé pour qu'il retente un établissement de session WPS ou modifier l'ordre du tableau obtenu à l'étape E31.

A l'étape suivante E35, le point d'accès gestionnaire commande le transfert d'au moins une partie du tableau généré ou sélectionné à l'étape E34 à chaque exécutant. Par exemple, le point d'accès gestionnaire commande le transfert à chaque point d'accès exécutant des informations représentatives du ou des créneaux temporels pour lesquels le point d'accès exécutant est autorisé à établir une session WPS avec le nouveau terminal ainsi que l'identifiant du prochain point d'accès exécutant qui sera, si la session WPS n'est pas établie, autorisé à établir une session WPS avec le nouveau terminal. Par exemple, le point d'accès gestionnaire transfère à chaque point d'accès exécutant la totalité des informations comprises dans le tableau.

A l'étape E36, le point d'accès gestionnaire vérifie si un message l'informant du succès de l'appairage du nouveau terminal est reçu.

Dans l'affirmative, le point d'accès gestionnaire interrompt le présent algorithme. Dans la négative, le point d'accès gestionnaire retourne à l'étape E33.

Le procédé selon l'invention permet avantageusement à un terminal de se connecter à un réseau donné comportant plusieurs points d'accès situés ou non dans la même bande de fréquence tout en conservant la simplicité d'utilisation du protocole WPS. Démarrer une session WPS sur ces différents points d'accès est dès lors possible. Cette solution est particulièrement intéressante dans le cas où plusieurs points d'accès appartiennent au même réseau et sont situés dans la même bande de fréquence comme cela est le cas pour les systèmes d'extension de couverture de communication sans-fil (« extenders » en anglais).

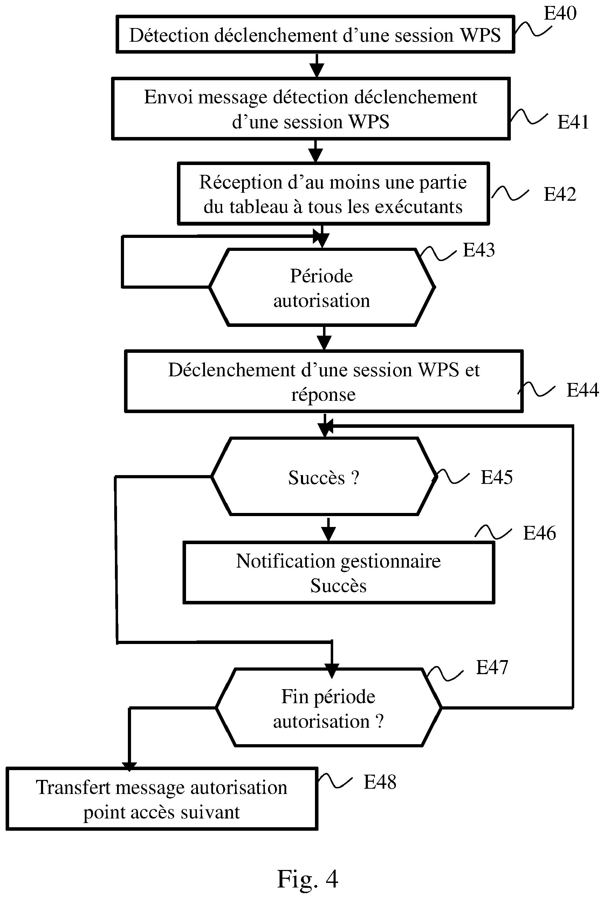

La Fig. 4 représente un premier exemple d'algorithme exécuté par point d'accès lorsqu'il est exécutant selon la présente invention.

A l'étape E40, le point d'accès exécutant détecte un appui sur un bouton pour le déclenchement d'une demande de session WPS.

A l'étape suivante E41, le point d'accès exécutant transfère un message au point d'accès gestionnaire indiquant qu'une session WPS est déclenchée.

A l'étape suivante E42, le point d'accès exécutant reçoit du point d'accès gestionnaire un message qui comprend des informations représentatives du ou des créneaux temporels pour lesquels le point d'accès exécutant est autorisé à établir une session WPS avec le nouveau terminal ainsi que l'identifiant du prochain point d'accès exécutant qui sera, si la session WPS n'est pas établie, autorisé à établir une session WPS avec le nouveau terminal. En variante, le point d'accès exécutant reçoit du point d'accès gestionnaire un message comprenant le tableau tel que décrit à l'étape E31 de la Fig. 3.

A l'étape E43, le point d'accès exécutant vérifie, avec son horloge interne, s'il est dans la période temporelle pour laquelle il est autorisé à établir une session WPS.

Dans l'affirmative, le point d'accès exécutant passe à l'étape E44. Dans la négative, le point d'accès exécutant réitère l'étape E43.

A l'étape E44, le point d'accès exécutant ajoute dans au moins une trame de balise (« beacon frame » en anglais) une information indiquant qu'une session d'appairage est active. Cet ajout est effectué uniquement dans la période pendant laquelle il est autorisé à établir une session d'appairage. Autrement dit, un point d'accès exécutant n'ajoute pas dans ses trames de balise une information indiquant qu'une session d'appairage est active. L'absence de cette information dans les trames de balise diffusées par le point rend impossible la détection d'une situation de recouvrement par un autre point d'accès ou par un terminal.

A l'étape E45, le point d'accès exécutant vérifie si l'appairage WPS a réussi.

Dans l'affirmative, le point d'accès exécutant passe à l'étape E46. Dans la négative, le point d'accès exécutant passe à l'étape E47.

A l'étape E46, le point d'accès exécutant transfère au point d'accès gestionnaire un message représentatif du succès de l'appairage WPS avec le terminal.

A l'étape E47, le point d'accès exécutant vérifie si la période temporelle pour laquelle il est autorisé à établir une session WPS est terminée.

Dans l'affirmative, le point d'accès exécutant passe à l'étape E48. Dans la négative, le point d'accès exécutant retourne à l'étape E45.

A l'étape E48, le point d'accès exécutant transfère un message au prochain point d'accès exécutant identifié dans le message reçu à l'étape E42, indiquant à celui-ci qu'il est autorisé à établir une session WPS avec le nouveau terminal.

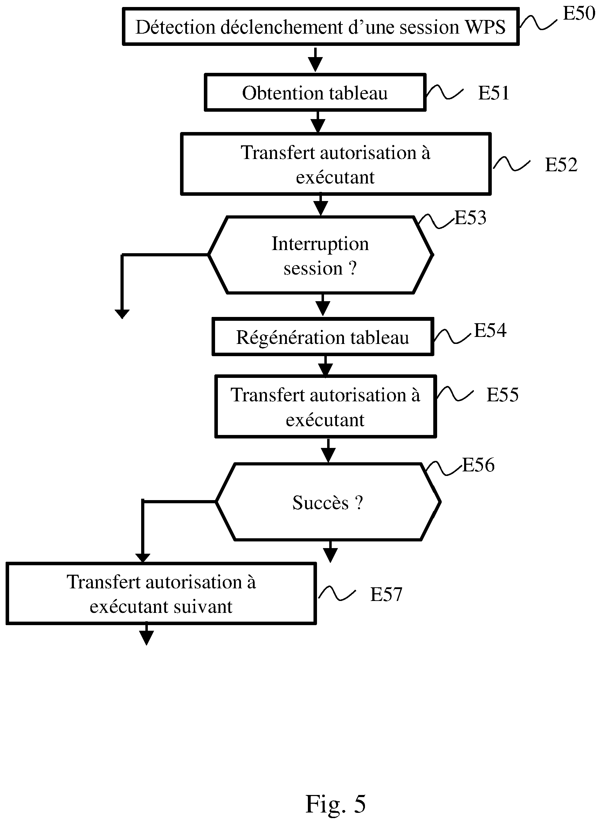

La Fig. 5 représente un second exemple d'algorithme exécuté par un point d'accès lorsqu'il est gestionnaire selon la présente invention.

A l'étape E50, le point d'accès gestionnaire détecte le déclenchement par un utilisateur d'une demande de session WPS. La demande de déclenchement d'une telle session se fait par exemple par appui sur un bouton physique d'un des points d'accès du système. Selon une variante, le déclenchement d'une telle session se fait par appui sur un bouton virtuel d'une interface homme machine associée à l'un des points d'accès du système.

Le déclenchement de la session WPS peut être effectué sur le point d'accès gestionnaire ou sur un point d'accès exécutant.

Lorsque le déclenchement de la session WPS est effectué sur un point d'accès exécutant, le point d'accès gestionnaire reçoit un message du point d'accès ayant détecté l'appui sur le bouton.

A l'étape E51, le point d'accès gestionnaire obtient un tableau qui comporte les informations de la distribution des autorisations à procéder à l'établissement d'une session WPS avec un nouveau terminal. Le point d'accès gestionnaire de connexion WPS a pour rôle d'établir le scénario à mettre en place pour mener à bien l'appairage WPS. Ce scénario définit la séquence de distribution d'un ticket ainsi que sa durée de validité. Le tableau comprend, pour chaque exécutant, des informations représentatives du ou des créneaux temporels pour lesquels le point d'accès exécutant est autorisé à établir une session WPS avec le nouveau terminal, l'ordre dans lequel le point d'accès exécutant est autorisé à établir une session WPS avec le nouveau terminal.

Par exemple, le point d'accès gestionnaire comporte dans sa mémoire différents tableaux et en sélectionne un en fonction du point d'accès qui a détecté l'appui sur le bouton WPS. En variante le point d'accès gestionnaire détermine en temps réel le tableau en fonction du point d'accès qui a détecté l'appui sur le bouton WPS.

A l'étape suivante E52, le point d'accès gestionnaire commande le transfert d'informations représentatives du ou des créneaux temporels à chaque point d'accès exécutant du tableau. Le premier point d'accès exécutant est ainsi autorisé à établir une session WPS avec le nouveau terminal.

A l'étape suivante E53, le point d'accès gestionnaire vérifie si un message représentatif d'un échec de la session WPS est reçu.

Dans l'affirmative, le point d'accès gestionnaire passe à l'étape E54, dans la négative, le point d'accès gestionnaire passe à l'étape E56.

A l'étape E54, le point d'accès gestionnaire génère ou sélectionne un nouveau tableau. Par exemple, le point d'accès gestionnaire peut redonner l'autorisation au dernier point d'accès exécutant autorisé pour qu'il retente un établissement de session WPS ou modifier l'ordre du tableau obtenu à l'étape E51.

A l'étape suivante E55, le point d'accès gestionnaire commande le transfert d'informations représentatives du ou des créneaux temporels aux point d'accès exécutants du tableau tel qu'obtenu à l'étape E54.

A l'étape E56, le point d'accès gestionnaire vérifie si un message informant le point d'accès gestionnaire du succès de l'appairage du nouveau terminal est reçu.

Dans l'affirmative, le point d'accès gestionnaire interrompt le présent algorithme. Dans la négative, le point d'accès gestionnaire retourne à l'étape E53 si le créneau temporel dans lequel le premier point d'accès exécutant est autorisé à établir une session WPS avec le nouveau terminal n'est pas échu ou, si un message représentatif de l'échec de la session WPS est reçu, passe à l'étape E57.

A l'étape suivante E57, le point d'accès gestionnaire commande le transfert d'informations représentatives du ou des créneaux temporels, pour le point d'accès exécutant suivant du tableau, l'autorisant à établir une session WPS avec le nouveau terminal et retourne à l'étape E53.

Le procédé selon l'invention permet avantageusement à un terminal de se connecter à un réseau donné comportant plusieurs points d'accès situés ou non dans la même bande de fréquence tout en conservant la simplicité d'utilisation du protocole WPS. Démarrer une session WPS sur ces différents points d'accès est dès lors possible. Cette solution est particulièrement intéressante dans le cas où plusieurs points d'accès appartiennent au même réseau et sont situés dans la même bande de fréquence comme cela est le cas pour les systèmes d'extension de couverture de communication sans-fil (« extenders » en anglais).

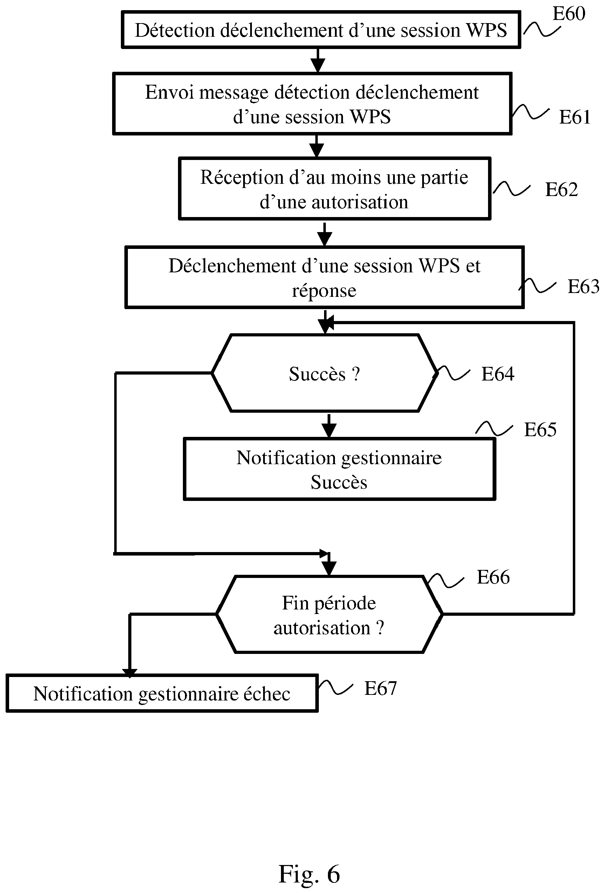

La Fig. 6 représente un second exemple d'algorithme exécuté par un point d'accès lorsqu'il est exécutant selon la présente invention.

A l'étape E60, le point d'accès exécutant détecte un appui sur un bouton pour le déclenchement d'une session WPS.

A l'étape suivante E61, le point d'accès exécutant transfère un message au point d'accès gestionnaire indiquant qu'une session WPS est déclenchée.

A l'étape suivante E62, le point d'accès exécutant reçoit du point d'accès gestionnaire un message qui comprend des informations représentatives du ou des créneaux temporels pour lesquels le point d'accès exécutant est autorisé à établir une session WPS avec le nouveau terminal.

A l'étape E63, le point d'accès exécutant ajoute dans au moins une trame de balise (« beacon frame » en anglais) une information indiquant qu'une session d'appairage est active. Cet ajout est effectué uniquement dans la période pendant laquelle il est autorisé à établir une session d'appairage. Autrement dit un point d'accès exécutant n'ajoute pas dans ses trames de balise une information indiquant qu'une session d'appairage est active. L'absence de cette information dans les trames de balise diffusées par le point rend impossible la détection d'une situation de recouvrement par un autre point d'accès ou par un terminal.

A l'étape E64, le point d'accès exécutant vérifie si l'appairage WPS a réussi.

Dans l'affirmative, le point d'accès exécutant passe à l'étape E66. Dans la négative, le point d'accès exécutant passe à l'étape E65.

A l'étape E65, le point d'accès exécutant transfère au point d'accès gestionnaire un message représentatif du succès de l'appairage WPS avec le terminal.

A l'étape E66, le point d'accès exécutant vérifie si la période temporelle pour laquelle il est autorisé à établir une session WPS est terminée.

Dans l'affirmative, le point d'accès exécutant passe à l'étape E67. Dans la négative, le point d'accès exécutant retourne à l'étape E64.

A l'étape E67, le point d'accès exécutant transfère au point d'accès gestionnaire un message représentatif de l'échec de l'appairage WPS.

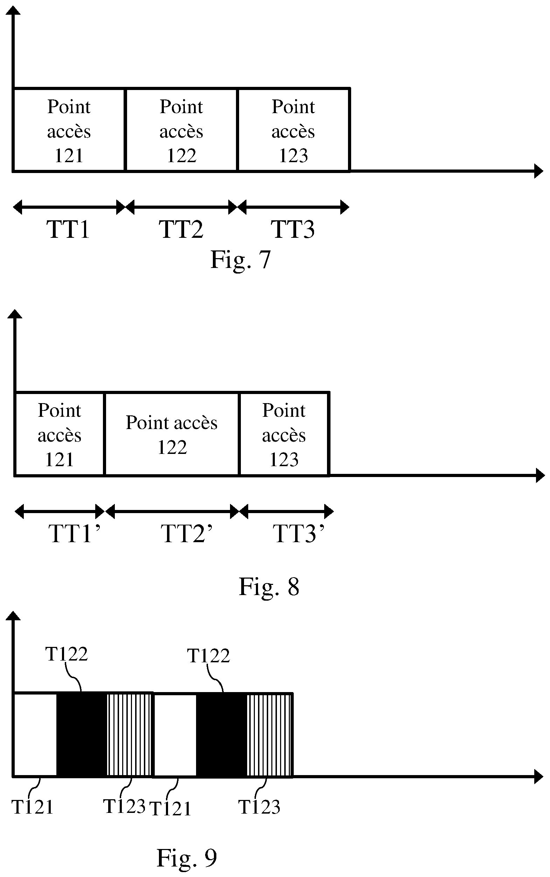

La Fig.7 représente un premier exemple de la répartition dans le domaine temporel d'une autorisation d'établissement de session WPS.

Dans l'exemple de la Fig. 7, le point d'accès gestionnaire répartit le temps alloué pour un appairage d'un nouveau terminal dans une session WPS de manière égale à chaque point d'accès exécutant de manière égale.

Un créneau temporel de même durée est alloué à chaque exécutant.

Le point d'accès 124 est par exemple le point d'accès gestionnaire. Dans le créneau temporel TT1, le point d'accès 121 est autorisé à établir une session WPS avec le nouveau terminal, dans le créneau temporel TT2, le point d'accès 122 est autorisé à établir une session WPS avec le nouveau terminal et dans le créneau temporel TT3, le point d'accès 123 est autorisé à établir une session WPS avec le nouveau terminal

La Fig.8 représente un second exemple de la répartition dans le domaine temporel d'une autorisation d'établissement de session WPS.

Dans l'exemple de la Fig. 8, le point d'accès gestionnaire répartit le temps alloué pour un appairage d'un nouveau terminal dans une session WPS de manière inégale à chaque point d'accès exécutant de manière égale.

Un créneau temporel est alloué à chaque exécutant.

Le point d'accès 124 est par exemple le point d'accès gestionnaire. Dans le créneau temporel TT1', le point d'accès 121 est autorisé à établir une session WPS avec le nouveau terminal, dans le créneau temporel TT2', le point d'accès 122 est autorisé à établir une session WPS avec le nouveau terminal et dans le créneau temporel TT3', le point d'accès 123 est autorisé à établir une session WPS avec le nouveau terminal.

La Fig.9 représente un troisième exemple de la répartition dans le domaine temporel d'une autorisation d'établissement de session WPS.

Dans l'exemple de la Fig. 9, le point d'accès gestionnaire répartit le temps alloué pour un appairage d'un nouveau terminal dans une session WPS de manière égale à chaque point d'accès exécutant de manière égale. Bien entendu, la répartition du temps alloué peut être différente entre les points d'accès exécutants.

Plusieurs créneaux temporels de même durée sont alloués à chaque exécutant.

Le point d'accès 124 est par exemple le point d'accès gestionnaire. Dans les créneaux temporels T121, le point d'accès 121 est autorisé à établir une session WPS avec le nouveau terminal, dans les créneaux temporels T122, le point d'accès 122 est autorisé à établir une session WPS avec le nouveau terminal et dans les créneaux temporels TT3, le point d'accès 123 est autorisé à établir une session WPS avec le nouveau terminal.

## Revendications

1. Procédé d'appairage d'un terminal à un point d'accès d'un réseau de communication sans fil, ledit réseau comprenant une pluralité de points d'accès dits points d'accès exécutants, les point d'accès exécutants étant coordonnés de manière centralisée par un point d'accès assurant la fonction de gestionnaire, dit point d'accès gestionnaire, **caractérisé en ce que** le procédé comporte les étapes suivantes exécutées par le point d'accès gestionnaire de :
- réception (E30) d'un message d'un point d'accès exécutant comprenant une information indiquant qu'un terminal souhaite s'appairer audit point d'accès ;
- obtention (E31), pour chaque point d'accès exécutant, des informations représentatives d'au moins un créneau temporel pour lequel le point d'accès exécutant est autorisé à établir une session d'appairage WPS avec le nouveau terminal, l'ordre dans lequel le point d'accès exécutant est autorisé à établir une session d'appairage WPS avec le nouveau terminal, chaque créneau temporel étant disjoint des créneaux temporels pour lesquels les autres points d'accès sont autorisés à établir une session d'appairage WPS avec le nouveau terminal ;
- envoi (E32) d'un message à chaque point d'accès exécutant comprenant au moins les informations représentatives du au moins un créneau temporel pour lequel le point d'accès exécutant est autorisé à établir une session d'appairage WPS avec le nouveau terminal.

2. Procédé selon la revendication 1, **caractérisé en ce que** le procédé comporte en outre une étape de :
- réception d'un message d'un point d'accès exécutant comprenant une information indiquant que la session d'appairage WPS a échoué pendant la durée du au moins un créneau temporel,
- obtention, pour chaque point d'accès exécutant des informations représentatives d'au moins un créneau temporel pour lequel le point d'accès exécutant est autorisé à établir une session d'appairage WPS avec le nouveau terminal, chaque créneau temporel étant disjoint des autres créneaux temporels ;
- envoi d'un message à chaque point d'accès exécutant comprenant au moins les informations représentatives du au moins un créneau temporel pour lequel le point d'accès exécutant est autorisé à établir une session d'appairage WPS avec le nouveau terminal.

3. Procédé selon la revendication 1 ou 2, **caractérisé en ce que** le procédé comporte en outre une étape de :
- réception d'un message d'un point d'accès exécutant comprenant une information indiquant que la session d'appairage WPS a échoué pendant la durée du au moins un créneau temporel,
- envoi d'un message à un autre point d'accès exécutant indiquant que l'autre point d'accès exécutant est autorisé à établir une session d'appairage WPS avec le nouveau terminal.

4. Procédé selon l'une quelconque des revendications précédentes, **caractérisé en ce que** les créneaux temporels ont une durée identique.

5. Procédé selon l'une quelconque des revendications précédentes, **caractérisé en ce qu'**au moins un créneau temporel a une durée différente des autres créneaux temporels.

6. Procédé selon l'une quelconque des revendications précédentes, **caractérisé en ce qu'**au moins deux créneaux temporels sont alloués à un point d'accès exécutant.

7. Procédé d'appairage d'un terminal à un point d'accès d'un réseau de communication sans fil, ledit réseau comprenant une pluralité de points d'accès dits points d'accès exécutants, les point d'accès exécutants étant coordonnés de manière centralisée par un point d'accès assurant la fonction de gestionnaire, dit point d'accès gestionnaire, **caractérisé en ce que** le procédé comporte les étapes suivantes exécutées par un point d'accès exécutant de :
- réception d'un message comprenant une information indiquant que ledit terminal souhaite s'appairer audit point d'accès ;
- envoi d'un message audit point d'accès gestionnaire, le message comprenant une information indiquant que ledit terminal souhaite s'appairer audit point d'accès ;
- réception d'un message du point d'accès gestionnaire comprenant des informations représentatives d'au moins un créneau temporel pour lequel le point d'accès exécutant est autorisé à établir une session d'appairage WPS avec le nouveau terminal,
- ajout dans au moins une trame de balise dudit point d'accès d'une information indiquant qu'une session d'appairage est active, uniquement pendant la durée du au moins un créneau temporel pour lequel le point d'accès exécutant est autorisé à établir une session d'appairage WPS avec le nouveau terminal.

8. Procédé selon la revendication 7, **caractérisé en ce que** si la session d'appairage WPS échoue pendant la durée du au moins un créneau temporel, le procédé comporte en outre une étape de :
- envoi d'un message audit point d'accès gestionnaire, ledit message comprenant une information indiquant que la session d'appairage WPS a échoué pendant la durée du au moins un créneau temporel.

9. Procédé selon la revendication 7 ou 8, **caractérisé en ce que** si la session d'appairage WPS échoue après la durée du au moins un créneau temporel, le procédé comporte en outre une étape de :
- envoi d'un message audit point d'accès gestionnaire, ledit second message comprenant une information indiquant que la session d'appairage WPS a échoué pendant la durée du au moins un créneau temporel.

10. Procédé selon l'une des revendications 7 à 9, **caractérisé en ce que** le message comprenant des informations représentatives d'au moins un créneau temporel pour lequel le point d'accès exécutant est autorisé à établir une session d'appairage WPS avec le nouveau terminal comporte en outre au moins une information identifiant au moins un autre point d'accès exécutant et **en ce que** le procédé comporte en outre une étape de :
- envoi d'un message à l'autre point d'accès exécutant indiquant que l'autre point d'accès exécutant est autorisé à établir une session d'appairage WPS avec le nouveau terminal.

11. Dispositif d'appairage d'un terminal à un point d'accès d'un réseau de communication sans fil, ledit réseau comprenant une pluralité de points d'accès dits points d'accès exécutants, les points d'accès exécutants étant coordonnés de manière centralisée par un point d'accès assurant la fonction de gestionnaire, dit point d'accès gestionnaire, **caractérisé en ce que** le dispositif est un dispositif pour un point d'accès gestionnaire et comporte :
- des moyens pour recevoir un message d'un point d'accès exécutant comprenant une information indiquant qu'un terminal souhaite s'appairer audit point d'accès ;
- des moyens pour obtenir, pour chaque point d'accès exécutant des informations représentatives d'au moins un créneau temporel pour lequel le point d'accès exécutant est autorisé à établir une session d'appairage WPS avec le nouveau terminal, l'ordre dans lequel le point d'accès exécutant est autorisé à établir une session d'appairage WPS avec le nouveau terminal, chaque créneau temporel étant disjoint des créneaux temporels pour lesquels les autres points d'accès sont autorisés à établir une session d'appairage WPS avec le nouveau terminal ;
- des moyens pour envoyer un message à chaque point d'accès exécutant comprenant au moins les informations représentatives du au moins un créneau temporel pour lequel le point d'accès exécutant est autorisé à établir une session d'appairage WPS avec le nouveau terminal.

12. Dispositif d'appairage d'un terminal à un point d'accès d'un réseau de communication sans fil, ledit réseau comprenant une pluralité de points d'accès dits points d'accès exécutants, les point d'accès exécutants étant coordonnés de manière centralisée par un point d'accès assurant la fonction de gestionnaire, dit point d'accès gestionnaire, **caractérisé en ce que** le dispositif est un dispositif pour un point d'accès exécutant et comporte :
- des moyens pour recevoir un message comprenant une information indiquant que ledit terminal souhaite s'appairer audit point d'accès ;
- des moyens pour envoyer un message audit point d'accès gestionnaire, le message comprenant une information indiquant que ledit terminal souhaite s'appairer audit point d'accès ;
- des moyens pour recevoir du point d'accès gestionnaire un message comprenant des informations représentatives d'au moins un créneau temporel pour lequel le point d'accès exécutant est autorisé à établir une session d'appairage WPS avec le nouveau terminal,
- des moyens pour ajouter dans au moins une trame de balise dudit point d'accès une information indiquant qu'une session d'appairage est active, uniquement pendant la durée du au moins un créneau temporel pour lequel le point d'accès exécutant est autorisé à établir une session d'appairage WPS avec le nouveau terminal.

13. Programme d'ordinateur **caractérisé en ce qu'**il comprend des instructions qui, lorsque exécutées par un dispositif pour un point d'accès gestionnaire, ou un dispositif pour un point d'accès exécutant, permettent audit dispositif d'exécuter le procédé selon l'une des revendications 1 à 6, ou 7 à 10, respectivement.

14. Un support d'enregistrement sur lequel est stocké un programme d'ordinateur selon la revendication 13.

## Patentansprüche

1. Verfahren zum Pairing eines Endgeräts mit einem Zugangspunkt eines drahtlosen Kommunikationsnetzes, wobei das Netzwerk eine Vielzahl von Zugangspunkten, sogenannten ausführenden Zugangspunkten, umfasst. Die ausführenden Zugangspunkte werden dabei zentral von einem Zugangspunkt koordiniert, der die Funktion des Verwalters übernimmt, dem sogenannten verwaltenden Zugangspunkt. Dies ist **dadurch gekennzeichnet, dass** das Verfahren die folgenden Schritte umfasst, die von dem verwaltenden Zugangspunkt ausgeführt werden:
- Empfang (E30) einer Nachricht von einem ausführenden Zugangspunkt, die eine Information enthält, die angibt, dass ein Endgerät ein Pairing mit dem Zugangspunkt durchführen möchte;
- Erhalt (E31), für jeden ausführenden Zugangspunkt, von Informationen, die für mindestens ein Zeitfenster repräsentativ sind, für das der ausführende Zugangspunkt berechtigt ist, eine WPS-Pairing-Sitzung mit dem neuen Endgerät aufzubauen. Die Reihenfolge, in der der ausführende Zugangspunkt berechtigt ist, eine WPS-Pairing-Sitzung mit dem neuen Endgerät aufzubauen, ist dabei zusammenhanglos mit den Zeitfenstern, in denen andere Zugangspunkte berechtigt sind, eine WPS-Pairing-Sitzung mit dem neuen Endgerät aufzubauen;
- Sendung (E32) einer Nachricht an jeden ausführenden Zugangspunkt, die mindestens die Informationen enthält, die für mindestens ein Zeitfenster repräsentativ sind, für das der ausführende Zugangspunkt berechtigt ist, eine WPS-Pairing-Sitzung mit dem neuen Endgerät aufzubauen.

2. Verfahren nach Anspruch 1, **dadurch gekennzeichnet, dass** das Verfahren außerdem Schritte umfasst, bei denen Folgendes erfolgt:
- Empfang einer Nachricht von einem ausführenden Zugangspunkt, die eine Information enthält, die angibt, dass die WPS-Pairing-Sitzung während der Dauer des mindestens einen Zeitfensters fehlgeschlagen ist;
- Erhalt, für jeden ausführenden Zugangspunkt, von Informationen, die für mindestens ein Zeitfenster repräsentativ sind, für das der ausführende Zugangspunkt berechtigt ist, eine WPS-Pairing-Sitzung mit dem neuen Endgerät aufzubauen, wobei jedes Zeitfenster mit anderen Zeitfenstern zusammenhanglos ist;
- Sendung einer Nachricht an jeden ausführenden Zugangspunkt, die mindestens die Informationen enthält, die für mindestens ein Zeitfenster repräsentativ sind, für das der ausführende Zugangspunkt berechtigt ist, eine WPS-Pairing-Sitzung mit dem neuen Endgerät aufzubauen.

3. Verfahren nach Anspruch 1 oder 2, **dadurch gekennzeichnet, dass** das Verfahren außerdem Schritte umfasst, bei denen Folgendes erfolgt:
- Empfang einer Nachricht von einem ausführenden Zugangspunkt, die eine Information enthält, die angibt, dass die WPS-Pairing-Sitzung während der Dauer des mindestens einen Zeitfensters fehlgeschlagen ist;
- Sendung einer Nachricht an einen anderen ausführenden Zugangspunkt, die angibt, dass der andere ausführende Zugangspunkt berechtigt ist, eine WPS-Pairing-Sitzung mit dem neuen Endgerät aufzubauen.

4. Verfahren nach einem der vorhergehenden Ansprüche, **dadurch gekennzeichnet, dass** die Zeitfenster eine identische Dauer haben.

5. Verfahren nach einem der vorhergehenden Ansprüche, **dadurch gekennzeichnet, dass** mindestens ein Zeitfenster eine Dauer hat, die sich von den anderen Zeitfenstern unterscheidet.

6. Verfahren nach einem der vorhergehenden Ansprüche, **dadurch gekennzeichnet, dass** mindestens zwei Zeitfenster einem ausführenden Zugangspunkt zugewiesen werden.

7. Verfahren zum Pairing eines Endgeräts mit einem Zugangspunkt eines drahtlosen Kommunikationsnetzes, wobei das Netzwerk eine Vielzahl von Zugangspunkten, sogenannten ausführenden Zugangspunkten, umfasst. Die ausführenden Zugangspunkte werden dabei zentral von einem Zugangspunkt koordiniert, der die Funktion des Verwalters übernimmt, dem sogenannten verwaltenden Zugangspunkt. Dies ist **dadurch gekennzeichnet, dass** das Verfahren die folgenden Schritte umfasst, die von einem ausführenden Zugangspunkt ausgeführt werden:
- Empfang einer Nachricht, die eine Information enthält, die angibt, dass das Endgerät ein Pairing mit dem Zugangspunkt durchführen möchte;
- Sendung einer Nachricht an den verwaltenden Zugangspunkt, wobei die Nachricht Informationen enthält, die angeben, dass das Endgerät ein Pairing mit dem Zugangspunkt durchführen möchte;
- Empfang einer Nachricht von dem verwaltenden Zugangspunkt, die Informationen enthält, die für mindestens ein Zeitfenster repräsentativ sind, für das der ausführende Zugangspunkt berechtigt ist, eine WPS-Pairing-Sitzung mit dem neuen Endgerät aufzubauen;
- Hinzufügen von Informationen, die anzeigen, dass eine Pairing-Sitzung aktiv ist, zu mindestens einem Beacon-Frame des Zugangspunkts und ausschließlich für die Dauer des mindestens einen Zeitfensters, für das der ausführende Zugangspunkt berechtigt ist, eine WPS-Pairing-Sitzung mit dem neuen Endgerät aufzubauen.

8. Verfahren nach Anspruch 7, **dadurch gekennzeichnet, dass**, wenn die WPS-Pairing-Sitzung während der Dauer des mindestens einen Zeitfensters fehlschlägt, das Verfahren ferner den folgenden Schritt umfasst:
- Sendung einer Nachricht an den verwaltenden Zugangspunkt, wobei die Nachricht eine Information enthält, dass die WPS-Pairing-Sitzung während der Dauer des mindestens einen Zeitfensters fehlgeschlagen ist.

9. Verfahren nach Anspruch 7 oder 8, **dadurch gekennzeichnet, dass**, wenn die WPS-Pairing-Sitzung nach der Dauer des mindestens einen Zeitfensters fehlschlägt, das Verfahren ferner den folgenden Schritt umfasst:
- Sendung einer Nachricht an den verwaltenden Zugangspunkt, wobei diese zweite Nachricht eine Information enthält, dass die WPS-Pairing-Sitzung während der Dauer des mindestens einen Zeitfensters fehlgeschlagen ist.

10. Verfahren nach einem der Ansprüche 7 bis 9, **dadurch gekennzeichnet, dass** die Nachricht, die Informationen umfasst, die für mindestens ein Zeitfenster repräsentativ sind, für das der ausführende Zugangspunkt berechtigt ist, eine WPS-Pairing-Sitzung mit dem neuen Endgerät aufzubauen, außerdem mindestens eine Information enthält, die mindestens einen anderen ausführenden Zugangspunkt identifiziert und dass das Verfahren außerdem den folgenden Schritt umfasst:
- Sendung einer Nachricht an einen anderen ausführenden Zugangspunkt, die angibt, dass der andere ausführende Zugangspunkt berechtigt ist, eine WPS-Pairing-Sitzung mit dem neuen Endgerät aufzubauen.

11. Vorrichtung zum Pairing eines Endgeräts mit einem Zugangspunkt eines drahtlosen Kommunikationsnetzes, wobei das Netzwerk eine Vielzahl von Zugangspunkten, sogenannten ausführenden Zugangspunkten, umfasst. Die ausführenden Zugangspunkte werden dabei zentral von einem Zugangspunkt koordiniert, der die Funktion des Verwalters übernimmt, dem sogenannten verwaltenden Zugangspunkt. Dies ist **dadurch gekennzeichnet, dass** die Vorrichtung eine Vorrichtung für einen verwaltenden Zugangspunkt ist und Folgendes umfasst:
- Mittel zum Empfang einer Nachricht von einem ausführenden Zugangspunkt, die eine Information enthält, die angibt, dass ein Endgerät ein Pairing mit dem Zugangspunkt durchführen möchte;
- Mittel zum Erhalt (E31), für jeden ausführenden Zugangspunkt, von Informationen, die für mindestens ein Zeitfenster repräsentativ sind, für den der ausführende Zugangspunkt berechtigt ist, eine WPS-Pairing-Sitzung mit dem neuen Endgerät aufzubauen. Die Reihenfolge, in der der ausführende Zugangspunkt berechtigt ist, eine WPS-Pairing-Sitzung mit dem neuen Endgerät aufzubauen, ist dabei zusammenhanglos mit den Zeitfenstern, in denen andere Zugangspunkte berechtigt sind, eine WPS-Pairing-Sitzung mit dem neuen Endgerät aufzubauen;
- Mittel zur Sendung einer Nachricht an jeden ausführenden Zugangspunkt, die mindestens die Informationen enthält, die für mindestens ein Zeitfenster repräsentativ sind, für das der ausführende Zugangspunkt berechtigt ist, eine WPS-Pairing-Sitzung mit dem neuen Endgerät aufzubauen.

12. Vorrichtung zum Pairing eines Endgeräts mit einem Zugangspunkt eines drahtlosen Kommunikationsnetzes, wobei das Netzwerk eine Vielzahl von Zugangspunkten, sogenannten ausführenden Zugangspunkten, umfasst. Die ausführenden Zugangspunkte werden dabei zentral von einem Zugangspunkt koordiniert, der die Funktion des Verwalters übernimmt, dem sogenannten verwaltenden Zugangspunkt. Dies ist **dadurch gekennzeichnet, dass** die Vorrichtung eine Vorrichtung für einen ausführenden Zugangspunkt ist und Folgendes umfasst:
- Mittel zum Empfang einer Nachricht, die eine Information enthält, die angibt, dass dieses Endgerät sich mit dem Zugangspunkt paaren möchte;
- Mittel zur Sendung einer Nachricht an den verwaltenden Zugangspunkt, wobei die Nachricht Informationen enthält, die angeben, dass das Endgerät ein Pairing mit dem Zugangspunkt durchführen möchte;
- Mittel zum Empfang einer Nachricht von dem verwaltenden Zugangspunkt, die Informationen enthält, die für mindestens ein Zeitfenster repräsentativ sind, für das der ausführende Zugangspunkt berechtigt ist, eine WPS-Pairing-Sitzung mit dem neuen Endgerät aufzubauen;
- Mittel zum Hinzufügen von Informationen, die anzeigen, dass eine Pairing-Sitzung aktiv ist, zu mindestens einem Beacon-Frame des Zugangspunkts und ausschließlich für die Dauer des mindestens einen Zeitfensters, für das der ausführende Zugangspunkt berechtigt ist, eine WPS-Pairing-Sitzung mit dem neuen Endgerät aufzubauen.

13. Computerprogramm, **dadurch gekennzeichnet, dass** es Anweisungen umfasst, die, wenn sie von einer Vorrichtung für einen verwaltenden Zugangspunkt oder einer Vorrichtung für einen ausführenden Zugangspunkt ausgeführt werden, es der Vorrichtung ermöglichen, das Verfahren nach einem der Ansprüche 1 bis 6 bzw. 7 bis 10 auszuführen.

14. Ein Speichermedium, auf dem ein Computerprogramm nach Anspruch 13 gespeichert ist.

## Claims

1. Method for pairing a terminal with an access point of a wireless communication network, said network comprising a plurality of access points referred to as executing access points, the executing access points being coordinated in a centralised manner by an access point fulfilling the function of manager, referred to as the managing access point, **characterised in that** the method comprises the following steps performed by the managing access point of:
- receiving (E30) a message from an executing access point comprising information indicating that a terminal wishes to pair with said access point;
- obtaining (E31), for each executing access point, information representing at least one time slot for which the executing access point is authorised to establish a WPS pairing session with the new terminal, the order in which the executing access point is authorised to establish a WPS pairing session with the new terminal, each time slot being separate from the time slots for which the other access points are authorised to establish a WPS pairing session with the new terminal;
- sending (E32) a message to each executing access point comprising at least the information representing the at least one time slot for which the executing access point is authorised to establish a WPS pairing session with the new terminal.

2. Method according to claim 1, **characterised in that** the method further comprises a step of:
- receiving from an executing access point a message comprising information indicating that the WPS pairing session has failed during the period of the at least one time slot,
- obtaining, for each executing access point, information representing at least one time slot for which the executing access point is authorised to establish a WPS pairing session with the new terminal, each time slot being separate from the other time slots;
- sending a message to each executing access point comprising at least the information representing the at least one time slot for which the executing access point is authorised to establish a WPS pairing session with the new terminal.

3. Method according to claim 1 or 2, **characterised in that** the method further comprises a step of:
- receiving a message from an executing access point comprising information indicating that the WPS pairing session failed during the period of the at least one time slot,
- sending a message to another executing access point indicating that the other executing access point is authorised to establish a WPS pairing session with the new terminal.

4. Method according to any one of the preceding claims, **characterised in that** the time slots have identical durations.

5. Method according to any one of the preceding claims, **characterised in that** at least one time slot has a duration different from the other time slots.

6. Method according to any one of the preceding claims, **characterised in that** at least two time slots are allocated to an executing access point.

7. Method for pairing a terminal with an access point of a wireless communication network, said network comprising a plurality of access points referred to as executing access points, the executing access points being coordinated in a centralised manner by an access point fulfilling the function of manager, referred to as the managing access point, **characterised in that** the method comprises the following steps performed by an executing access point of:
- receiving a message comprising information indicating that said terminal wishes to pair with said access point;
- sending a message to said managing access point, the message comprising information indicating that said terminal wishes to pair with said access point;
- receiving a message from the managing access point comprising information representing at least one time slot for which the executing access point is authorised to establish a WPS pairing session with the new terminal;
- adding, in at least one beacon frame of said access point, information indicating that a pairing session is active, solely during the period of the at least one time slot for which the executing access point is authorised to establish a WPS pairing session with the new terminal.

8. Method according to claim 7, **characterised in that**, if the WPS pairing session fails during the period of the at least one time slot, the method further comprises a step of:
- sending a message to said managing access point, said message comprising information indicating that the WPS pairing session has failed during the period of the at least one time slot.

9. Method according to claim 7 or 8, **characterised in that**, if the WPS pairing session fails after the period of the at least one time slot, the method further comprises a step of:
- sending a message to said managing access point, said second message comprising information indicating that the WPS pairing session has failed during the period of the at least one time slot.

10. Method according to one of claims 7 to 9, **characterised in that** the message comprising information representing at least one time slot for which the executing access point is authorised to establish a WPS pairing session with the new terminal further comprises at least one item of information identifying at least one other executing access point and **in that** the method further comprises a step of:
- sending a message to the other executing access point indicating that the other executing access point is authorised to establish a WPS pairing session with the new terminal.

11. Device for pairing a terminal with an access point of a wireless communication network, said network comprising a plurality of access points referred to as executing access points, the executing access points being coordinated in a centralised manner by an access point fulfilling the function of manager, referred to as the managing access point, **characterised in that** the device is a managing access point and comprises:
- means for receiving a message from an executing access point comprising information indicating that a terminal wishes to pair with said access point;
- means for obtaining, for each executing access point, information representing at least one time slot for which the executing access point is authorised to establish a WPS pairing session with the new terminal, the order in which the executing access point is authorised to establish a WPS pairing session with the new terminal, each time slot being separate from the time slots for which the other access points are authorised to establish a WPS pairing session with the new terminal;
- means for sending a message to each executing access point comprising at least the information representing the at least one time slot for which the executing access point is authorised to establish a WPS pairing session with the new terminal.

12. Device for pairing a terminal with an access point of a wireless communication network, said network comprising a plurality of access points referred to as executing access points, the executing access points being coordinated in a centralised manner by an access point fulfilling the function of manager, referred to as the managing access point, **characterised in that** the device is a device for an executing access point and comprises:
- means for receiving a message comprising information indicating that said terminal wishes to pair with said access point;
- means for sending a message to said managing access point, the message comprising information indicating that said terminal wishes to pair with said access point;
- means for receiving from the managing access point a message comprising information representing at least one time slot for which the executing access point is authorised to establish a WPS pairing session with the new terminal;
- means for adding, in at least one beacon frame of said access point, information indicating that a pairing session is active, solely during the period of the at least one time slot for which the executing access point is authorised to establish a WPS pairing session with the new terminal.

13. Computer program **characterised in that** it comprises instructions which, when executed by a device for a managing access point, or a device for an executing access point, enable said device to execute the method according to one of claims 1 to 6, or 7 to 10, respectively.

14. A recording medium on which there is stored a computer program according to claim 13.
